# EUROPÄISCHE PATENTANMELDUNG

(11) **EP 1 255 391 A1**
(43) Veröffentlichungstag der Anmeldung: **06.11.2002**
(21) Anmeldenummer: 01110884.2
(22) Anmeldetag: 04.05.2001
(51) Int. Cl.: H04L 29/06

(54) **Verfahren und System zur sicheren Vergabe eines Passwortes in einem internetgestützten System**

(71) Anmelder: conject AG, 80469 München (DE)
(72) Erfinder: Wiesener, Stefan G. Dr., 80798 München (DE); Lambert, Monika, 80805 München (DE); Weiss, Frank, 80469 München (DE); Flores, Cesar, 81677 München (DE)

(57) **Zusammenfassung**

Es wird ein System und ein Verfahren zur sicheren Vergabe eines neuen Passwortes an einen Benutzer, der sein Passwort vergessen hat und keinen Zugang mehr zum internetgestützten System hat angegeben. Der Benutzer ruft dazu bei der Hotline des Anbieters Systems an und beantwortet die geheime Frage die er bei seiner Registrierung im System angegeben hat. Falls die Antwort richtig ist, beginnt der zuständige Mitarbeiter der Hotline der über die Datenbank Zugriff auf die Benutzer ID des Benutzers hat manuell den Prozess der neuen Passwortvergabe für den Benutzer. Die erste Hälfte der Stellen des vom System neu generierten mehrstelligen Passwortes werden vom zuständigen Mitarbeiter des Anbieters via Telefon dem Benutzer direkt mitgeteilt.

Die restlichen Stellen des Passwortes werden in einer vom System automatisch generierten E-Mail an die E-Mailadresse des Benutzers versandt. Niemand außer dem Benutzer kennt das gesamte neue Passwort.

## Beschreibung

Die Erfindung betrifft ein System und ein Verfahren zur sicheren Vergabe eines neuen Passwortes an einen Benutzer, der sein Passwort vergessen hat und keinen Zugang mehr zum internetgestützten System hat. Der Benutzer ruft dazu bei der Hotline des Anbieters (Verwaltungsfirma, die den Server des Systems hostet und Zugriff auf die Datenbank hat) des internetgestützten Systems an und muss die geheime Frage die er bei seiner Registrierung im System angegeben hat gemäß seiner selbst vergebenen Antwort richtig beantworten. Die Verwaltungsfirma hat über die Datenbank Zugriff auf den Benutzernamen und die geheime Frage sowie die Antwort der geheimen Frage, jedoch nicht auf das vom Benutzer selbst vergebene Passwort. Die richtige Antwort des Benutzers auf die geheime Frage wird überprüft. Falls die Antwort richtig ist, beginnt der zuständige Mitarbeiter der Hotline manuell den Prozess der neuen Passwortvergabe für den Benutzer gekoppelt mit dessen Benutzernamen. Die hälfte der Stellen des vom System neu generierten Passwortes werden vom zuständigen Mitarbeiter der Hotline via Telefon direkt an den Benutzer weitergegeben. Die andere Hälfte des Passwortes wird in einer vom System automatisch generierten E-Mail an die E-Mailadresse des Benutzers versandt.

Es besteht nach dem Gesetz der digitalen Signatur ein Bedarf an gesetzeskonformen Einrichtungen, Systemen und Verfahren zur sicheren Identifikation und Anmeldung von Personen, so dass gewährleistet ist, dass systemspezifische (bzw. projektspezifische) Berechtigungen nur an sicher identifizierte Personen herausgegeben werden. Bei der Berechtigungsvergabe spielt die Anmeldung von berechtigten Personen und in diesem Zusammenhang die Vergabe von Zugriffsberechtigungen in Form von Benutzernamen und Passwort eine wichtige Rolle. Da bei Ausgabe von projektspezifischen Berechtigungen an eine unberechtigte Person Haftungsfragen für den Trust Center (Berechtigungsherausgeber) auftreten, besteht der Bedarf für ein sicheres Ausgabeverfahren und -system von Zugriffsrechten. Die gesetzlichen Bestimmungen allein geben diese Sicherheit noch nicht.

Die bestehenden Verfahren zur Vergabe eines neuen Passwortes durch den Systemadministrator bzw. Anbieter eines internetgestützten Systems funktionieren ebenfalls über die Abfrage der vom Benutzer bei seiner Registrierung angegebenen geheimen Frage und Antwort. Das neue Passwort wird dabei jedoch z.B. bei einigen internetbasierten Mailsystemen vom Anbieter des Systems bzw. dem Systemadministrator in kompletter Form per E-Mail inklusive des Benutzernamens an den Benutzer gesandt. Die Gefahr des unberechtigten Zugriffs auf das System durch dritte Personen, welche sich beispielsweise illegal Zugriff zu allen vom Benutzer empfangenen E-Mails verschafft haben ist dabei nicht unerheblich. Beim "Internetbanking" wird das neue Passwort inklusive Benutzernamen nach Abfrage der geheimen Frage auf dem Postweg dem Benutzer zugesandt. Hier besteht ebenfalls die Gefahr des Missbrauchs der Zugriffsrechte durch Diebstahl des Briefes mit den Zugriffsdaten durch Dritte. Ebenfalls ein Sicherheitsrisiko der oben beschriebenen Verfahren ist die Zugriffsberechtigung der Systemadministratoren auf die benutzerspezifischen Benutzernamen und Passwörter zum Zeitpunkt der Vergabe eines neuen Passwortes bevor der Benutzer die Möglichkeit hat sein Passwort zu ändern.

Es ist die Aufgabe vorliegender Erfindung über das Internet und Telefon ein System mit einem einfachen, zeitsparenden und möglichst sicherem Verfahren zur Vergabe eines neuen Passwortes an einen Benutzer, der sein altes Passwort vergessen hat, und sich nicht mehr im System anmelden kann, insbesondere zur Sicherung der Freigabe von Berechtigungen an eine eindeutig identifizierte Person bereitzustellen. Die Lösung dieser Aufgabe erfolgt durch die Merkmale der Ansprüche.

Das vorliegende internetgestützte System ist ein Collaborationtool mit einem integriertem Dokumenten-Management System (Projektraum). Es dient u.a. der Projektabwicklung im Bauwesen über das Internet und basiert auf einer Client-Server Architektur. Der Server wird vom Anbieter des Systems gehostet und gepflegt. Die einzelnen Clienten melden mit Benutzernamen und Passwort über das Internet im System an.
Zur Nutzung des System bzw. der damit verbundene Software benötigt der Benutzer einen PC mit einem Internetanschluss und einem Webbrowser sowie die Internetadresse der Homepage des Anbieters. Die Nachrichtenübermittlung und der Zugriff zu dem System sind mit bis zu 128 Bit verschlüsselt.
Die Beschreibung zur Ausführung der Erfindung wird im folgenden anhand des "Password retrievals" im oben erwähnten und kurz beschriebenen internetgestützten Dokumenten-Management System (Projektraum) erörtert.

Der Benutzer ruft dazu bei der Hotline des Anbieters (Verwaltungsfirma, die den Server des Systems hostet und Zugriff auf die Datenbank hat) des internetgestützten Systems an und muss die geheime Frage die er bei seiner Registrierung im System angegeben hat gemäß seiner selbst vergebenen Antwort richtig beantworten. Die Registrierungsdaten jedes Benutzers inklusive der geheimen Frage und der dazugehörigen Antwort sind in der Datenbank in der individuellen Benutzer ID gespeichert. Die Verwaltungsfirma hat über die Datenbank Zugriff auf den Benutzer ID und damit die geheime Frage sowie die Antwort der geheimen Frage, jedoch nicht auf das vom Benutzer selbst vergebene Passwort. Die richtige Antwort des Benutzers auf die geheime Frage wird von der zuständigen Person der Hotline via Telefon überprüft. Falls die Antwort richtig ist, beginnt der zuständige Mitarbeiter der Hotline manuell den Prozess der neuen Passwortvergabe für den Benutzer die gekoppelt mit dessen Benutzer ID abläuft. Die erste Hälfte des vom System neu generierten mehrstelligen Passwortes werden vom zuständigen Mitarbeiter der Hotline dem Benutzer direkt via Telefon mitgeteilt. Die andere Hälfte des Passwortes wird in einer vom System automatisch generierten E-Mail an die E-Mailadresse des Benutzers versandt. Der Mitarbeiter der Hotline kann die zweite Hälfte des Passwortes nicht einsehen. Die E-Mailadresse des Benutzers entnimmt das System (Datenbank, Server) aus den unter der Benutzer ID gespeicherten Daten. Der Benutzer kann sich nun im System (Projektraum) unter seinem alten Benutzernamen mit seinem neuen Passwort anmelden. Seine Berechtigungen auf Projekte im Projektraum sind die selben, da die Projektrechte (Projekt ID) an die Benutzer ID gebunden ist und nicht an das Passwort.
Wie im obigen Beispiel erörtert erfolgt die Vergabe des neuen Passwortes an den Benutzer auf zwei unterschiedlichen, völlig getrennten Kommunikationsmedien ohne das einem dritten das komplette Passwort bekannt ist:
1. Das System generiert nach manuellem Start des Prozesses das mehrstellige Passwort und die erste Hälfte wird vom zuständigen Mitarbeiter des Anbieters gelesen und dem Benutzer via Telefon mitgeteilt.
2. Die restlichen Stellen des Passwortes werden in einer automatisch generierten E-Mail an die vom System über den Benutzer ID erkannte E-Mailadresse des Benutzers gesandt.

Das erfindungsgemäße Verfahren ist durch die Aufteilung des Passwortes bzw. der Passwortversendung auf die beiden Kommunikationsmedien sicherer als die herkömmlichen Verfahren, die das neue Passwort über ein Kommunikationsmedium übertragen. Zudem gibt es bei dem erfindungsgemäßen Verfahren niemanden außer dem Benutzer, der das neu vergebene Passwort kennt was einen weiterer Vorteil, z.B. gegenüber dem "Password retrieval" per Post beim "Internetbanking" darstellt.
Das Verfahren ist ebenfalls wirtschaftlicher und zeitsparender gegenüber anderen, insbesondere manuelle Verfahren.

## Patentansprüche

1. Verfahren und System zur sicheren Vergabe eines neuen Passwortes in einem internetgestützten System, falls der Benutzer sein Passwort vergessen hat und sich nicht mehr in das System einloggen kann mit
• Einem System (Datenbank, Server) zur Generierung eines neuen Passwortes das neu mit der in der Datenbank gespeicherten Benutzer ID des Benutzers verknüpft wird,
• wobei die erste Hälfte des Passwortes von dem zuständigen Mitarbeiter des Anbieters via Telefon an den Benutzer weitergegeben wird,
• wobei die weiteren Stellen des Passwortes über eine automatisch vom System generierte E-Mail parallel zur Übermittlung der ersten Stellen des Passwortes via Telefon an die E-Mailadresse des Benutzers gesendet werden,
• wobei niemand außer dem Benutzer das neue Passwort kennt.
